# EUROPEAN PATENT SPECIFICATION

(11) **EP 3 764 804 B1**
(45) Date of publication and mention of the grant of the patent: **19.07.2023**
(21) Application number: 19718457.5
(22) Date of filing: 15.03.2019
(51) Int. Cl.: A23G 1/18, F28F 19/00

(54) **MACHINE FOR THE THERMAL PROCESSING OF UNPACKAGED THERMOLABILE PRODUCTS, IN PARTICULAR FOOD PRODUCTS**
MASCHINE ZUR THERMISCHEN BEHANDLUNG VON UNVERPACKTEN THERMOLABILEN PRODUKTEN, INSBESONDERE VON LEBENSMITTELPRODUKTEN
MACHINE POUR LE TRAITEMENT THERMIQUE DE PRODUITS THERMOLABILES, EN PARTICULIER DE PRODUITS ALIMENTAIRES, NON EMBALLÉS

(30) Priority: 16.03.2018 IT 201800003695
(43) Date of publication of application: 20.01.2021
(73) Proprietor: MTS SRL UNIPERSONALE, 63074 S.Benedetto del Tronto (IT)
(72) Inventor: PENNESI, Marco, Durazzo (AL)
(74) Representative: Palestrini, Mauro
(86) International application number: PCT/IT2019/050058
(87) International publication number: WO 2019/175915

(56) References cited:
- EP-A1- 1 918 670
- WO-A1-00/04333
- WO-A2-2012/125586
- US-A- 3 587 729
- US-A- 3 835 922

## Description

### Technical Field

The present invention relates to thermal processing technology for unpackaged thermolabile products; that is to say, heat-perishable substances.

### Background art

In particular, the invention concerns a machine for the thermal processing - for the most varied purposes - of said products, in their solid (i.e. liquid or fluid) state, and more particularly food products.

A machine of the type indicated above is already known in prior art, as described in the document EP 2103892. Said machine essentially comprises a vat, with counter-facing side walls, for holding the products being processed; a heat exchanger, housed in the vat and supported by the side walls, provided with a heat exchange surface to come into direct contact with said products; and movable scraping means fixed to the heat exchange surface and the surfaces surrounding the vat. The heat exchange surface, in particular, is geometrically complex, forming a succession of circular conduits separated from the inside by substantially discoid, circular, heated or cooled walls, due to the action of suitable fluid heat-transfer means. During thermal processing, the unpackaged product mass is housed within said succession of circular conduits.

The circular conduits also house scrapers whose planes are arranged transversally to the prevailing circular direction of the conduits and whose contours are designed to complement those of the conduits.

The scrapers are moved in such a way as to systematically travel along the conduits and systematically move the particles of the product being processed so as to prevent the product from degrading as a result of excessively prolonged contact with the heat exchange surface.

In this type of machine, the heat exchange surface has a rather complex geometry, with masses and dimensions which significantly predominate over those of the scrapers.

Therefore, the strong heat ranges incurred by the machine when in operation cause differential heat dilations to occur between the scrapers and the scraped heat exchange surfaces, thus preventing the exact geometric congruence initially envisaged between the machine's profiles when not in operation from being maintained. If the heat-transfer means are actuated by a pressure fluid, such as steam, this effect is further aggravated by the unpredictably accentuable deformations to which the discoidal walls succumb as a result of the pressure of the heating fluid.

Due to the differences between the thermally dilated profiles of the scrapers and the conjoined heat exchange surfaces, it is not infrequent for product particles to escape this scraping action and to remain in contact with hot surfaces in particular for an excessive duration, thus causing damage to their physical-chemical properties, or to their organoleptic properties when the product being processed is, for instance, a food product. As the product so degraded, even - hypothetically - in small quantities only, disperses into the entire mass of the product contained in the machine without it being physically separable from the intact product mass, such a drawback entails a production fault on the one hand, and significant economic damage on the other, as its occurrence means that the entire mass of the processed product becomes unusable and therefore disposable as waste only.

Another machine of the type described above is already known from the document US 3835922. Such a machine describes a solution having a flat scraper oriented parallel to a flattened face of a rotor that is cylindrical in shape and coaxial with the thermal exchange surface. In addition, the machine has springing means that include spiral springs and pins that are implemented as disjointed elements from the scrapers. Document WO2012125586 instead discloses such a type of machine in which an exchanger for heating or cooling liquid or fluid products is provided. The products are heated or cooled by means of thermal exchange surfaces that are scraped by scrapers mounted on a revolving group that includes couples of solid, rigid, elements that are rotatably oscillating on a shaft and that slide their edges, in a slantwise direction, on the thermal exchange surface.

Document US 3 587 729 discloses a machine in which springing means are present that include spiral springs guided on pins that react against pistons guided into relative chambers. Such elements are all together combined for springing the blades operating against the heat surface for scraping away adherent food products. Document EP1918670 discloses a machine in which the product is contained between adjacent pairs of walls and is scraped from the walls of an exchanger by interposed blades carried by a revolving shaft, moved by a motor. The blades have a complex structural frame, which includes a strut that bilaterally supports scrapers devices supported by arms projecting themselves from the strut. Shock-absorbing materials, carried by the arms, push the scraper devices against thermally conditioned walls.

Document WO 00/04333 discloses a heat exchanger assembly in which scraping means comprise scraper elements, which are held captive on arms and that are biased outwardly by a resilient biasing means, which in this case is a compression spring coiled around the arm.

### Disclosure of the invention

The purpose of the present invention is therefore to resolve prior art problems by proposing a machine for thermal processing in which highly efficient and geometrically correct scraping is duly achievable under the machine's actual operating conditions.

### Brief Description of drawings

According to the invention, such a result is achieved by a machine as defined in the accompanying claims.

The characteristics and advantages of the invention are made clear with reference to an exemplary embodiment illustrated in the accompanying drawings, wherein:
- Figure 1 is an elevation view of a machine according to the invention;
- Figure 2 is a top plan view of the machine in Figure 1;
- Figure 3 is a side view of the machine shown in the figures above;
- Figure 4 is a cross-sectional view of the machine along the plane IV-IV in Figure 1;
- Figure 5 is a perspective view of the machine in Figure 1, shown with some parts removed to better highlight others;
- Figure 6 is an enlarged view of a detail of the machine shown in Figures 1 to 5;
- Figure 7 is an enlarged view of a further embodiment of the detail shown in Figure 6;
- Figure 8 is a cross-sectional view, corresponding to that in Figure 2, of the machine operating with the detail shown in Figure 7;
- Figure 9 is a partly cross-sectioned perspective overall view of a further embodiment of the invention;
- Figures 10, 11 and 12 are differently-angled views of a particular component shown in Figure 9.

### Detailed description of preferred embodiment of the invention

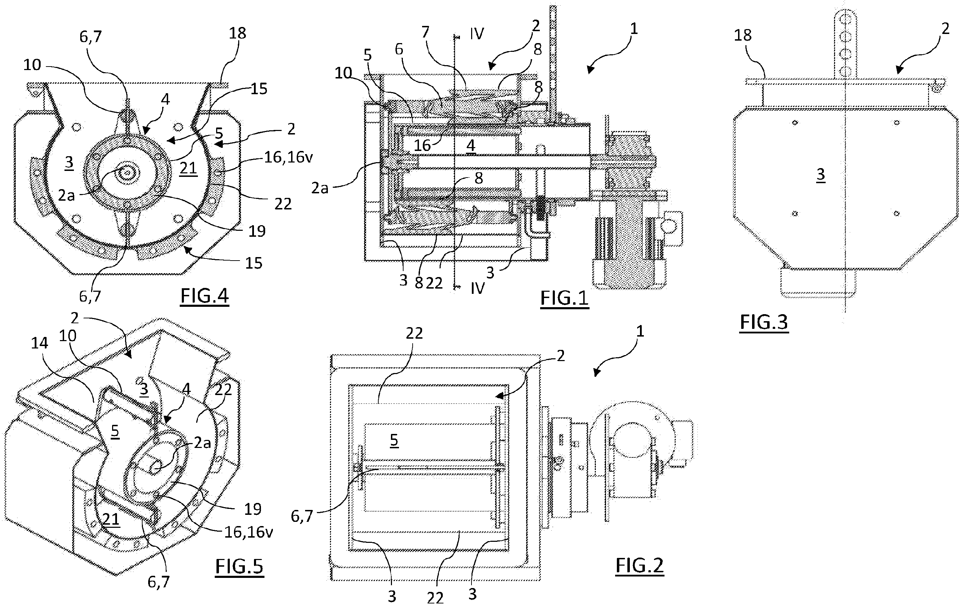

Referring now to the figures in the accompanying drawings, Figures 1 and 2 show, with reference number 1, a complete machine for the thermal processing of unpackaged thermolabile products, in particular food products.

The machine suitable for the thermal processing of unpackaged products, in particular food products, comprises:
a vat (2) with lateral walls (3;5,22) for containing the product;
a heat exchanger (4), coupled to the vat (2) and supported by said lateral walls (3;5,22), with at least one heat exchange surface (3;5,22) for product contact; scraping means (6) , coupled to and moveable with respect to said heat exchange surface (3;5,22), said scraping means (6) having a planar shape with at least one straight scraping edge (8); springing means (7) capable of coming said at least one straight scraping edge (8) into elastically sprung contact with at least one such heat exchange surface (3;5,22);
and is characterised in that
said scraping means (6) and said springing means (7) are incorporated one another into a one-body single planar shape which has said scraping edges (8) and at least one oblong shaped slit (9) that is placed close to the scraping edges (8) for cushioning the latter against the heat exchange surface (3;5,22) by modulating the elasticity of the planar shape as a whole. More particularly (Figures 4 and 5), the vat (2) has a cavity (21) for containing the products, which is substantially cylindrical and toroidal in shape, with a horizontal axis (2a) confined by two concentric cylindrical surfaces (5,22) and by two plane, lateral base walls (3), and surmounted by a pyramid-sectioned mouth (18) through which products for thermal processing are inserted-removed.

The heat exchanger (4) is housed in the vat (2) coaxially to the axis (2a) and inside the cylindrical surface (5), with a smaller diameter than that of the vat (2). Said exchanger (4) is also supported by the lateral walls (3) of the vat (2) and has a heat exchange surface (5) that at least coincides with the cylindrical surface further inside the vat (2) so as to come into direct contact with the products.

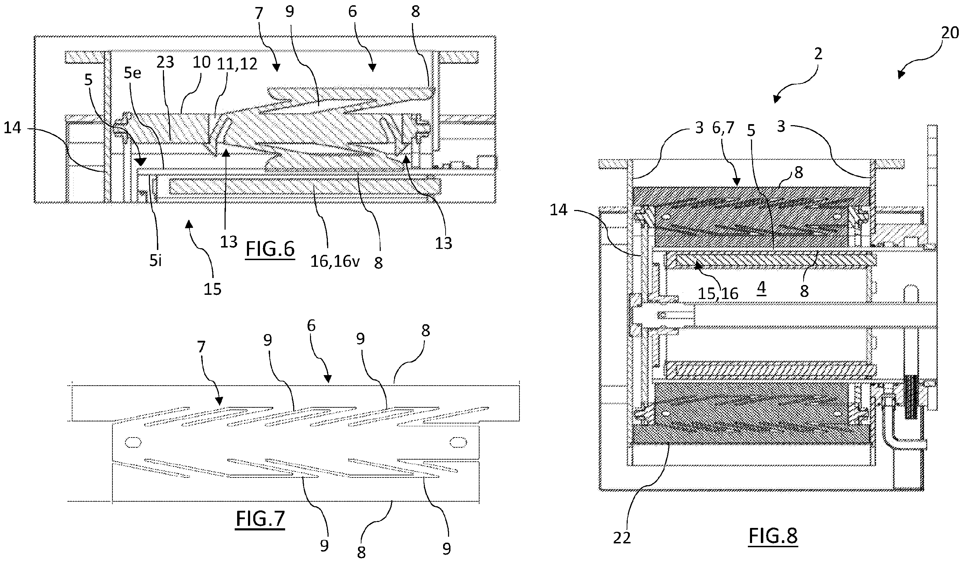

The convex face (5e) of the heat exchange surface (5) (Figure 6), facing the product to be processed, has a smooth metal surface. At the concave inner face (5i) of the metal surface, the exchanger (4) has heat-transfer means (15) that include electrically heated wires (16) housed in compartments (16v) formed within the wall of a tubular body (19), which is in turn housed within and rests against the exchange surface (5).

Preferably, the heat-transfer means (15) should also be coupled to the cylindrical surface (22), which is greater in diameter than the vat (2), should be distributed along the circumference of the product-containing cavity (21) and should be actuated, also in this case, by electrically heated wires (16) installed on the outside of and resting against the metal surface (22).

The scraping means (6) (Figures 1 and 6) are coupled to the heat exchange surfaces (5 and 22), being implemented in an essentially planar shape and with two straight scraping edges (8) simultaneously couplable to at least the opposite cylindrical surfaces (5 and 22) of the toroidal product-containing cavity (21).

The machine (1) further comprises springing means (7) for the scraping means (6), which allow the scraping edges (8) to be arranged, under optimal conditions, in constant spring-actuated contact with the scraped surfaces (5,22) under any temperature conditions at which the machine (1) operates.

Preferably, the springing means (7) should be built into the planar structure of the scraping means (6), with said planar structure having one oblong (preferably parallelogram)-shaped slit (9) placed close to the scraping edges (8) for this purpose.

By the scraping means (6) being made out of a metal and/or plastic material suitable for operating at the working temperatures of the machine (1) itself, the geometrical shape of the scraping means (6) allows them - or rather, their scraping edges (8) - to be perfectly aligned to the surfaces (5,22) to be scraped, whatever the thermal-deformation profile of the latter.

As shown in Figures 1 and 3, the scraping means (6) should preferably be coplanar to one another and should be offset longitudinally with respect to the direction of the axis (2a) so that each interacts with one half of the exchange surfaces (5,22) of the heat exchanger (4), which together confine of the product-holding cavity (21) .

As can be seen from Figures 4 and 5, the scraping means (6) are supported by bars (10) positioned parallel to the vat's axis (2a), with these bars integrated in a motorised frame (14) rotatable around a longitudinal axis (2a) of symmetry with the toroidal product-holding cavity (21).

The rotary movement of the frame (14) causes the bars (10) to set the scraping means (6) in a revolutionary motion, which leads the scraping means (6) to systematically scrape the surfaces (5 and 22) that form the confines of the cavity (21).

It can be seen from comparing Figures 5 and 6 that the rotating bars (10) have through slots (11) with substantially plane opposing faces (12), with the planar scraping means (6) resting and supported against them. The scraping means (6) have elastic latches (13) at their ends, formed from the same body so as to removably and quickly fasten the scraping means (6) to the complementary edges (23) of the slots (11).

Figure 7 illustrates an embodiment wherein the scraping means (6) incorporate springing means (7).

In this embodiment of the invention, the scraping means (6) are differently actuated by slits (7) that are more numerous and installed as angled, poly-sided notches. In

Figure 8, which shows an axial section of a different machine embodiment, referred to herein with the reference number (20), the shape of the scraping means (6) is as shown in Figure 7.

It can be seen from comparing this alternative machine embodiment (20) that, according to the differently designed springing means (7), the elasticity of the scraping means (6) can be constructively modulated so as to ensure the optimum scraping conditions necessary for each type of product for thermal processing and for all machine (1, 20) operating temperatures.

Advantageously, a single machine can also be equipped with scraping means (6) of different shapes and elastic properties, to be chosen and used each time, and even quickly replaced, without the need for special tools, as exemplified in Figure 6; in this way, the machine (1, 20) can be specialised according to the specific thermal processing and/or specific product for treatment. The elastic latches (13) not only enable the various types of scraping means (6) to be quickly replaced; they also enable the scraping means (6) being used to be entirely removed so as to facilitate and speed up the operation, maintenance, washing and sanitisation of the machine (1.20).

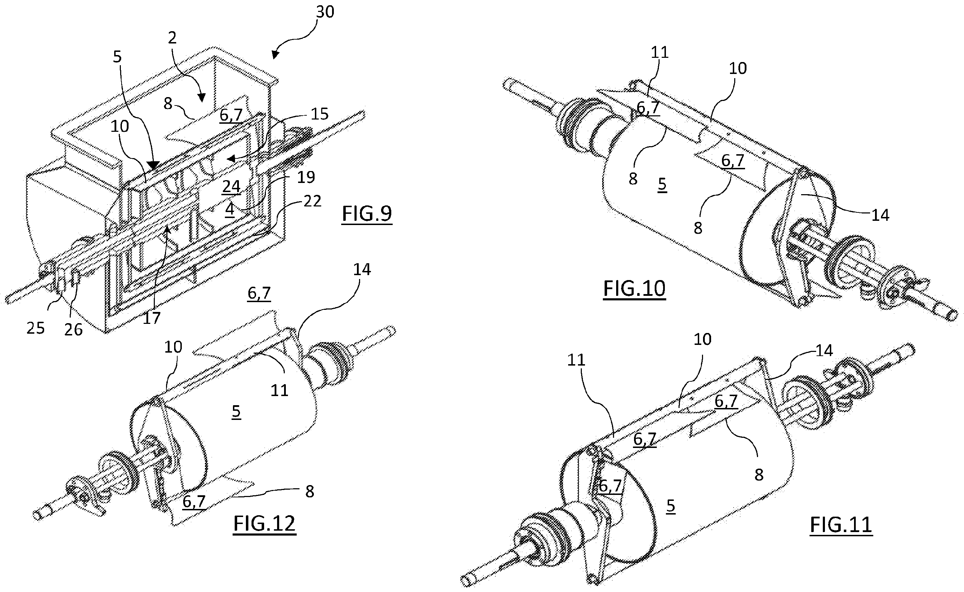

Figure 9 illustrates a further embodiment of a machine, denoted herein with reference number (30), wherein the exchanger (4) is entirely confined within the cylindrical surface (5) smaller in diameter than the vat (2), and is actuated therein by fluid heat-transfer means (15), more particularly by a flow of steam entering from, for instance, an external boiler. Clearly, if the machine (30) is to be used as a product refrigerant, an ethylene glycol liquid mixture - for instance - could be used as the heat-transfer fluid.

The heat-transfer means (15) comprise a hollow tubular body (19) supported by a central axis (24), in turn supported at its opposing ends and internally traversed by branches (25,26) that power and drain a circuit (17) along which the heat-transfer fluid is conducted into and subsequently evacuated out from the tubular body (19) .

Here, too, the exchange surface (5) of the exchanger (4) has a smooth cylindrical shape that can be easily scraped by the scraping means (6) incorporating the springing means (7).

More particularly, the scraping means are preferably - for this machine embodiment (30) - planar in shape with thin and flexible spring-steel blades.

The blades are cantilevered from the rotating bars (10), projecting out so as to come in to contact - with a certain degree of forced elastic inflection - firstly with the innermost heat exchange surface (5) of the vat (2) and also, preferably, with the the remaining walls (3,22) surrounding the cavity (21) holding the products for treatment (as shown in Figures 10-12).

As regards the support of the elastic blades by the rotating bars (10), or rather the frame (14) elements integrating the rotating bars (10), the figures show that, even in this case, the blades can be held in cantilever fashion by suitable slots (11) in which they are tightened and held by screws.

The invention fulfils the purpose of creating optimal scraping conditions that prevent thermal degradation by even the most minute particles of the product processed, as well as being highly flexible in operation and simple to build, which contribute to enhancing the machine's effectiveness and reducing its construction and maintenance costs.

The invention as designed herein is clearly capable of industrial application, and many modifications and variations can be made to it without departing from the claims set forth below.

## Claims

1. Machine suitable for the thermal processing of unpackaged products, in particular food products, comprising
a vat **(2)** with lateral walls **(3;5,22)** for containing the product;
a heat exchanger **(4),** coupled to the vat **(2)** and supported by said lateral walls **(3;5,22),** with at least one heat exchange surface **(3;5,22)** for product contact;
scraping means **(6),** coupled to and moveable with respect to said heat exchange surface **(3;5,22),** said scraping means **(6)** having a planar shape with at least one straight scraping edge **(8);**
springing means **(7)** capable of coming said at least one straight scraping edge **(8)** into elastically sprung contact with at least one such heat exchange surface **(3;5,22);** and
**characterised in that**
said scraping means **(6)** and said springing means **(7)** are incorporated one another into a one-body single planar shape which has said scraping edges **(8)** and at least one oblong shaped slit **(9)** that is placed close to the scraping edges **(8)** for cushioning the latter against the heat exchange surface **(3;5,22)** by modulating the elasticity of the planar shape as a whole.

2. Machine, according to claim **1, characterised in that** said oblong shaped slit **(9)** is parallelogram shaped.

3. Machine according to claim **1** or **2, characterised in that** said planar shape is traversed by at least one through slit **(9).**

4. Machine according to claims **1** or **2** or **3, characterised in that** said planar shape is carried with a perpendicular orientation to the heat exchange surface (3; **5,22).**

5. Machine according to any of the claims above, **characterised in that** said planar shape is supported by rotating bars **(10)** rotating in a revolutionary motion with respect to one said heat exchange surface **(3; 5,22)** .

6. Machine according to claim **5, characterised in that** said planar shape comprises elastic latches **(13)**incorporated into for removably fasten said planar shape to said rotating bars **(10).**

7. Machine according to claim **1, characterised in that** said at least one exchange surface **(3;5,22)** has a smooth cylindrical shape.

8. Machine according to claim **1, characterised in that** said planar shape is of a thin thickness and made of spring steel.

9. Machine according to claims **5** or **6, characterised in that** said rotating bars **(10)** have cantilevered slots for engaging and supporting said planar shape outwards towards said at least one heat exchange surface **(3;5,22).**

10. Machine according to claims **5** or **6, characterised in that** said rotating bars **(10)** have at least one plane face **(12),** with said planar shape supported flush against said plane face **(12).**

11. Machine according to claims **5** to **6, characterised in that** said rotating bars **(10)** are integrated within a motorised frame **(14)** rotatable around a longitudinal axis (**2**a) of symmetry with at least one said cylindrical heat exchange surface **(5;22).**

12. Machine according to claim **1, characterised in that** it comprises heat-transfer means **(15)** on at least one said cylindrical exchange surface **(3;5,22).**

13. Machine according to claim **12, characterised in that** said heat-transfer means **(15)** include electrically heated wires housed at least within one compartment **(16v)** within said at least one cylindrical exchange surface **(3;5,22)** .

14. Machine according to claim **12, characterised in that** said heat-transfer means **(15)** include a circuit **(17)** through which a heat-transfer fluid flow.

15. Machine according to claim **14, characterised in that** said heat-transfer fluid is steam.

## Patentansprüche

1. Maschine, geeignet zur thermischen Behandlung unverpackter Produkte, im Besonderen Lebensmittel, beinhaltend
eine Wanne **(2)** mit Seitenwänden **(3;5,22),** um das Produkt zu enthalten;
einen Wärmetauscher **(4),** der mit der Wanne **(2)** verbunden ist und von besagten Seitenwänden **(3;5,22)** gehalten wird, mit mindestens einer Wärmetauschfläche **(3;5,22)** für den Kontakt mit dem Produkt;
Schabermittel **(6),** die mit besagter Wärmetauschfläche **(3;5,22)** verbunden und in Bezug auf diese beweglich sind, besagte Schabermittel **(6)** haben dabei eine planare Form mit mindestens einer geraden Schaberkante **(8);**
Federungsmittel **(7),** die dazu imstande sind, besagte mindestens eine gerade Schaberkante **(8)** in einen elastisch gefederten Kontakt mit mindestens einer solcher Wärmetauschfläche **(3;5,22)** zu bringen; und **gekennzeichnet dadurch, dass**
besagte Schabermittel **(6)** und besagte Federungsmittel **(7)** gegenseitig in einer einzelnen, aus einem Körper bestehenden, planaren Form integriert sind, die besagte Schaberkanten **(8)** hat und mindestens einen länglich geformten Schlitz **(9),** der nahe an den Schaberkanten **(8)** angebracht ist, um Letztere gegen die Wärmetauschfläche **(3;5,22)** zu polstern, indem er die Elastizität der planaren Form im Ganzen moduliert.

2. Die Maschine nach dem Patentanspruch **1, gekennzeichnet dadurch, dass** besagter, länglich geformter Schlitz **(9)** parallelogrammförmig ist.

3. Die Maschine nach dem Patentanspruch **1** oder **2, gekennzeichnet dadurch, dass** besagte planare Form von mindestens einem durchgehenden Schlitz **(9)** durchquert wird.

4. Die Maschine nach den Patentansprüchen **1** oder **2** oder **3, gekennzeichnet dadurch, dass** besagte planare Form mit einer lotrechten Ausrichtung zur Wärmetauschfläche **(3; 5,22)** geführt ist.

5. Die Maschine nach jedem der vorhergehenden Patentansprüche, **gekennzeichnet dadurch, dass** besagte planare Form von Drehstäben (10) gehalten wird, die sich dabei in einer Umdrehungsbewegung in Bezug auf eine besagte Wärmetauschfläche **(3; 5,22)** drehen.

6. Die Maschine nach dem Patentanspruch **5, gekennzeichnet dadurch, dass** besagte planare Form in sie integrierte elastische Riegel **(13)** beinhaltet, um besagte planare Form abnehmbar an besagten Drehstäben **(10)** zu befestigen.

7. Die Maschine nach dem Patentanspruch **1, gekennzeichnet dadurch, dass** mindestens eine besagte Wärmetauschfläche **(3;5,22)** eine glatte, zylindrische Form hat.

8. Die Maschine nach dem Patentanspruch **1, gekennzeichnet dadurch, dass** besagte planare Form eine geringe Dicke hat und aus Federstahl besteht.

9. Die Maschine nach den Patentansprüchen **5** oder **6, gekennzeichnet dadurch, dass** besagte Drehstäbe **(10)** freitragende Aussparungen haben, um besagte planare Form nach außen in Richtung besagter mindestens einer Wärmetauschfläche **(3;5,22)** einzurücken und zu stützen.

10. Die Maschine nach den Patentansprüchen **5** oder **6, gekennzeichnet dadurch, dass** besagte Drehstäbe **(10)** mindestens eine ebene Seite **(12)** haben, wobei besagte planare Form bündig an besagter ebene Seite **(12)** gestützt wird.

11. Die Maschine nach den Patentansprüchen **5** bis **6, gekennzeichnet dadurch, dass** besagte Drehstäbe **(10)** in einen motorisierten Rahmen **(14)** integriert sind, drehbar um eine Längssymmetrieachse (2a) mit mindestens einer besagten zylindrischen Wärmetauschfläche **(5;22).**

12. Die Maschine nach dem Patentanspruch **1, gekennzeichnet dadurch, dass** sie Wärmeübertragungsmittel **(15)** an mindestens einer besagten zylindrischen Tauschfläche **(3;5,22)** beinhaltet.

13. Die Maschine nach dem Patentanspruch **12, gekennzeichnet dadurch, dass** besagte Wärmeübertragungsmittel **(15)** elektrisch erhitzte Drähte beinhalten, die mindestens innerhalb einer Kammer **(16v)** innerhalb der besagten mindestens einer zylindrischen Tauschfläche **(3;5,22)** untergebracht sind.

14. Die Maschine nach dem Patentanspruch **12, gekennzeichnet dadurch, dass** besagte Wärmeübertragungsmittel **(15)** einen Kreislauf **(17)** beinhalten, durch den eine Wärmeübertragungsflüssigkeit fließt.

15. Die Maschine nach dem Patentanspruch **14, gekennzeichnet dadurch, dass** besagte Wärmeübertragungsflüssigkeit Dampf ist.

## Revendications

1. Machine destinée au traitement thermique de produits non emballés, en particulier de produits alimentaires, comprenant
un bac (2) ayant des parois latérales (3 ; 5, 22) pour contenir le produit ;
un échangeur thermique (4), accouplé au bac (2) et supporté par lesdites parois latérales (3 ; 5, 22), ayant au moins une surface d'échange thermique (3 ; 5, 22) destinée à être en contact avec le produit ;
des moyens racleurs (6), accouplés à et mobiles par rapport à ladite surface d'échange thermique (3 ; 5, 22), lesdits moyens racleurs (6) ayant une forme plane avec au moins un bord racleur droit (8) ;
des moyens de suspension (7) capables d'amener ledit au moins un bord racleur droit (8) en contact élastique avec au moins ladite une surface d'échange thermique (3 ; 5, 22) ; et
**caractérisée en ce que**
lesdits moyens racleurs (6) et lesdits moyens de suspension (7) sont incorporés les uns les autres dans une forme plane simple en corps unique qui présente lesdits bords racleurs (8) et au moins une fente oblongue (9) qui est située à proximité des bords racleurs (8) pour amortir ces derniers contre la surface d'échange thermique (3 ; 5, 22) en modulant l'élasticité de la forme plane dans son ensemble.

2. Machine selon la revendication 1, **caractérisée en ce que** ladite fente oblongue (9) a la forme d'un parallélogramme.

3. Machine selon la revendication 1 ou 2, **caractérisée en ce que** ladite forme plane est traversée par au moins une fente (9) traversante.

4. Machine selon les revendications 1 ou 2 ou 3, **caractérisée en ce que** ladite forme plane est portée avec une orientation perpendiculaire à la surface d'échange thermique (3 ; 5, 22).

5. Machine selon l'une quelconque des revendications ci-dessus, **caractérisée en ce que** ladite forme plane est supportée par des barres rotatives (10) qui tournent avec un mouvement de révolution par rapport à ladite une surface d'échange thermique (3 ; 5, 22).

6. Machine selon la revendication 5, **caractérisée en ce que** ladite forme plane comprend des loquets élastiques (13) incorporés pour fixer de façon amovible ladite forme plane auxdites barres rotatives (10).

7. Machine selon la revendication 1, **caractérisée en ce que** ladite au moins une surface d'échange (3 ; 5, 22) a une forme cylindrique lisse.

8. Machine selon la revendication 1, **caractérisée en ce que** ladite forme plane présente une faible épaisseur et est réalisée en acier à ressorts.

9. Machine selon les revendications 5 ou 6, **caractérisée en ce que** lesdites barres rotatives (10) ont des fentes en porte-à-faux pour assujettir et soutenir ladite forme plane vers l'extérieur, vers ladite au moins une surface d'échange thermique (3 ; 5, 22) .

10. Machine selon les revendications 5 ou 6, **caractérisée en ce que** lesdites barres rotatives (10) ont au moins une face plane (12), avec ladite forme plane supportée à ras contre ladite face plane (12).

11. Machine selon les revendications 5 ou 6, **caractérisée en ce que** lesdites barres rotatives (10) sont intégrées dans un châssis motorisé (14) pouvant tourner autour d'un axe longitudinal (2a) de symétrie avec au moins ladite une surface d'échange thermique (5 ; 22) cylindrique.

12. Machine selon la revendication 1, **caractérisée en ce qu'**elle comprend des moyens de transfert thermique (15) sur au moins ladite une surface d'échange (3 ; 5, 22) cylindrique.

13. Machine selon la revendication 12, **caractérisée en ce que** lesdits moyens de transfert thermique (15) comprennent des fils chauffés électriquement, logés au moins dans un compartiment (16v) à l'intérieur de ladite au moins une surface d'échange (3 ; 5, 22) cylindrique.

14. Machine selon la revendication 12, **caractérisée en ce que** lesdits moyens de transfert thermique (15) comprennent un circuit (17) à travers lequel circule un fluide de transfert thermique.

15. Machine selon la revendication 14, **caractérisée en ce que** ledit fluide de transfert thermique est de la vapeur.
